Europäisches Patentamt

European Patent Office

Office européen des brevets

(11) Publication number: **0 065 791**
**B1**

(12) **EUROPEAN PATENT SPECIFICATION**

(45) Date of publication of patent specification: **31.07.85**

(21) Application number: **82200477.6**

(22) Date of filing: **20.04.82**

(51) Int. Cl.⁴: **A 23 N 12/02, B 01 D 11/02**

(54) Machine for the treatment of a solid product with a liquid.

(30) Priority: **22.04.81 NL 8101977**

(43) Date of publication of application:
**01.12.82 Bulletin 82/48**

(45) Publication of the grant of the patent:
**31.07.85 Bulletin 85/31**

(84) Designated Contracting States:
**AT BE CH DE FR GB LI NL**

(56) References cited:
**DE-A-2 235 599**
**FR-A-2 334 395**
**NL-A-7 004 832**
**NL-C- 163 133**
**US-A-1 352 393**
**US-A-2 569 199**
**US-A-3 930 801**

(73) Proprietor: **INSTITUUT VOOR BEWARING EN VERWERKING VAN LANDBOUWPRODUKTEN**
**Bornsesteeg 59 P.O. Box 18**
**NL-6700 AA Wageningen (NL)**

(72) Inventor: **Van Remmen, Hendrikus Hermanus Johannes**
**Hartogplein 5**
**NL-6671 ZC Zetten (NL)**

(74) Representative: **van der Beek, George Frans et al**
**Nederlandsch Octrooibureau Johan de Wittlaan 15 P.O. Box 29720**
**NL-2502 LS 's-Gravenhage (NL)**

Courier Press, Leamington Spa, England.

## Description

The invention relates to a machine for the treatment of a solid product with a liquid, comprising a drum divided by partitions, having a central opening, into a number of compartments, driving means for rotating the drum, and in each compartment at least one blade for the transportation of the product to a next compartment, wherein the liquid moves through the drum by overflowing.

Such a machine is known from Dutch patent application 7004832 in the name of Instituut voor Bewaring en Verwerking van Landbouwprodukten. Applications of such a machine are: the accomplishing of heat-exchange and/or substance exchange and/or chemical or biochemical reactions between the solid product and the liquid. Concrete examples are the washing, heating and blanching of potato slices. Usually the product and the liquid are in counterflow with each other. The liquid moves by gravity through the drum, while the solid product is mechanically transported by the blades from compartment to compartment.

An advantage of such a device is that the so-called product-water ratio, that is the ratio of the quantity of product with respect to the quantity of liquid in each compartment, can be chosen independent on the ratio of the quantity of product and the quantity of liquid flowing per hour through the machine. For each product a certain product-water ratio can be chosen necessary to get a product, around which the liquid is flowing well without having these consequences for the ratio of the quantities of product and liquid moving per hour through the drum.

In the known machine each partition extends along its entire circumference in the same radial plane, whilst the blades have an axial bend by means of which the product may be moved in the axial direction over a partition to a next compartment. It has appeared that this axial transport along the inclined blades may cause problems especially when the product is somewhat sticky, such as potato slices. It happens that such a product does not slide from the blades, for the axial transport can only take place if the product is lifted from the liquid. Another objection of the known machine is that a cone-shaped plate is welled to each of said blades, the apex of the cone-shaped plate being directed to the product discharge of the drum. These cones are a considerable obstruction for the cleaning of the device.

The aim of the invention is to provide a machine as indicated in the preamble, that is to say having a product-liquid ratio that is independent of the ratio of the quantites of product and liquid flowing per hour through the machine, and wherein the above-mentioned objections of the known machine are avoided.

Therefore, according to the invention the partitions are offset along a part of their circumferential length in the direction of the product supply end, and each blade extends from the innerside of the drum wall to an offset part of a partition so that product picked up by a blade in a compartment may slide from that blade in a plane substantially transverse to the drum axis and may fall over or via an offset partition part into a next compartment.

When the drum rotates, the product is transported by the blades in planes substantially perpendicular to the drum axis over an offset partition part into a next compartment. The axial transport of the product takes substantially place in the water. It may be that a part of the axial transport takes place on inclined parts of the partitions. As a consequence of the fact, that the radial transport takes place by means of the blades and the axial transport takes substantially place in the liquid, it cannot happen that the product remains of the blades. Moreover, the drum is easily admissible and cleanable.

Dutch patent specification 163,133 discloses a machine for the counterflow treatment of a stream of solid products with a liquid stream, comprising a rotatable drum divided by partitions into a number of compartments. These partitions are locally connected with each other by guide vanes which cross each other in pairs. To separate product and liquid perforated blades are used passing into non perforated plates, connecting the inner edge of a guide vane with the outer edge of the next guide vane. In this known machine the product divided in portions is treated with liquid also divided in separated portions of mutually equal volume. This means that the product-liquid ratio is equal to the ratio of the quantities of product and liquid flowing per hour through the machine. In treating products which need a high quantity of liquid to drag them along with the liquid or when the treatment of the product demands such a high liquid quantity, this may lead to a very high liquid consumption.

In the machine according to the present invention, the liquid transportation is only dependent on the supply and discharge and the liquid flows over the inner circumferential edge of partitions or through openings in the partitions. The quantity of liquid flowing per hour through the machine may be chosen independent on the product-liquid ratio.

The leaking out of the product on the blades can be improved if at some radial distance from each perforated blade a number of fingers substantially parallel to the blade are mounted. The fingers are able to tilt the product slices to that during a short period they rest in an upstanding position on the blades. To be able to discharge the treated product effectively, the end wall of the drum present at the side of the product discharge may be provided at each inner plane with a number of discharge scoops which may deposit the product on a discharge conveyor protruding into the drum.

Each partition may have one or more parts offset in the direction of the product supply, these parts being for instance carried out as bulged portions. If the partition has two or three offset parts, the product will be transported two or three times into a next compartment at each revolution of the drum. The washing and heating or cooling of the product may usually take place in less time than the blanching of that product. If a product should be subjected to a washing and heating or cooling treatment as well as to a blanching treatment, this can be carried out in one single drum if the partitions in one part of the drum have a greater number of offset portions than in another part of the drum.

In cases in which the machine operates in counterflow, the effect of the counterflow will be determined by the measure of separation of product and liquid, after the product is lifted above the liquid level and before it slides over a partition wall into a next compartment. Therefore the product should leak out as long as possible. To prolong this leaking out time, the machine may be provided with means to decrease the angular velocity of the drum during that portion of a drum revolution in which the product is transported. This periodical slowing down may be carried out by means of a microprocessor, by a periodically less excited magnetic slip coupling or by different type of mechanical transmissions. A simple construction comprises in the driving means of the drum a spring, which in the period that the product is taken up and transported by the blades, leads to a certain slowing down of the drum rotation by elastic deformation, said slowing down being overtaken after the product has been slid from the blades.

If the blades only transport the product in a direction transverse to the drum axis, the distance along which the bent portions of the partitions extend in the axial direction will be substantially equal to the distance between the partitions. However, it is not excluded that the blades have a small inclination in the axial direction in which case the axial width of the partition bends may be somewhat smaller.

As a matter of fact, the shape of the blades can be adapted to the kind of product. In cases of potato slices it may be advantageous to form the blades as buckets or scoops, while in the treatment of so-called pommes parisiennes plane blades are preferred. The sliding off of the product form the blades can be slowed down.

The invention will now be elucidated with the aid of the figures showing an embodiment of the invention.

Figure 1 shows a side view of the machine.

Figure 2 shows a longitudinal section.

Figure 3 shows a perspective view of the assembly of partitions and blades forming part of the machine according to the invention.

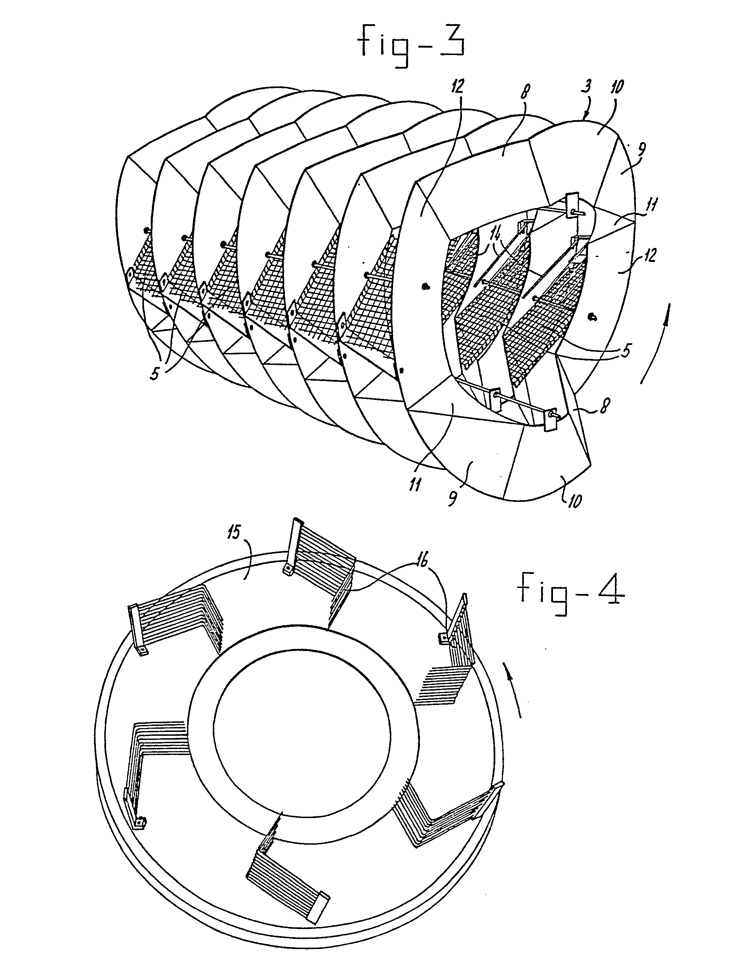

Figure 4 shows an end view on an end plate of the drum of the machine according to the invention at the side of the product discharge.

Figure 5 shows the compartments formed in the drum, the annular partitions being developed.

Figure 6 shows in cross section an alternative embodiment of the blades.

The machine has shown in the drawings is destined to treat a solid product with a liquid. This treatment can be a washing treatment, a heating treatment, a cooling treatment and a blanching treatment. Further the treatment can cause a chemical reaction or a substance exchange. The machine is especially suitable for the washing of potato slices and the blanching of agriculture or horticultural products.

The most important part of the machine is a rotatable drum 1 resting on rollers 2 to be driven and internally divided by partitions 3 having a central opening into a number of compartments 4.

In each of the compartments there is at least one perforated blade 5 meant to lift the product from the liquid in the drum and to transport the product over the inner edge of a partition 3 into a next compartment.

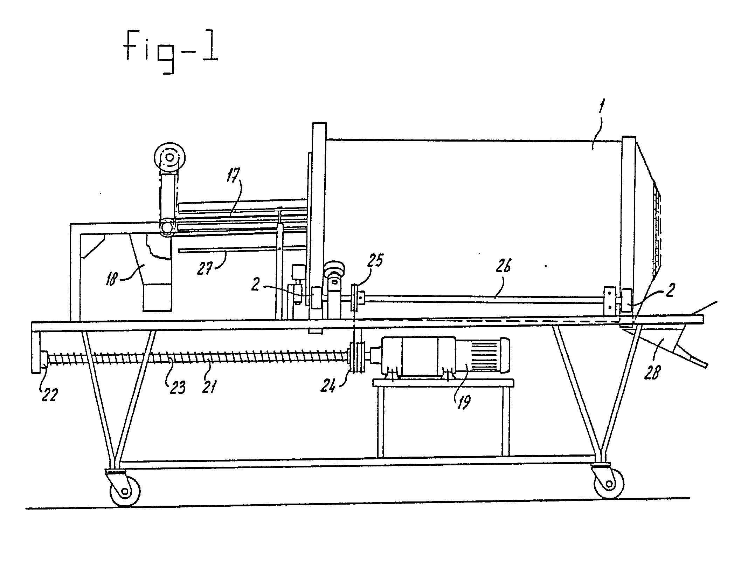

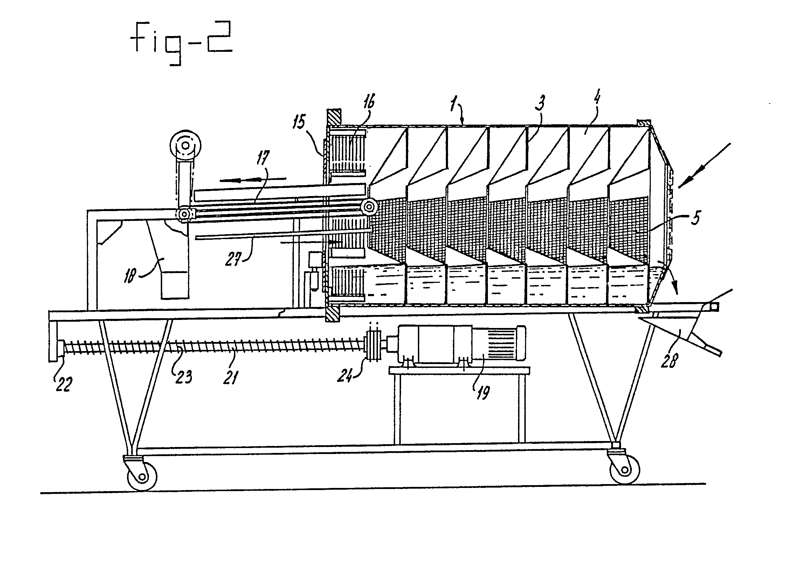

The product and the liquid are in counterflow. The liquid is supplied at the left hand side of figures 1 and 2 (line 27) and is discharged at the right hand side (through receiving hopper 28), vide single arrow. The product is supplied at the right hand side and discharged at the left hand side, vide double arrow.

The liquid flows in a continuous stream through the drum, the inner edges of the annular partitions and the inner edges of the annular end plate at the water discharge side of the drum forming overflows.

The shape of the partitions 3 is essential for the invention and this shape is chosen so that the product is moved by the blades 5 only in planes substantially transverse to the axis of the drum and may nevertheless fall in a next compartment 4.

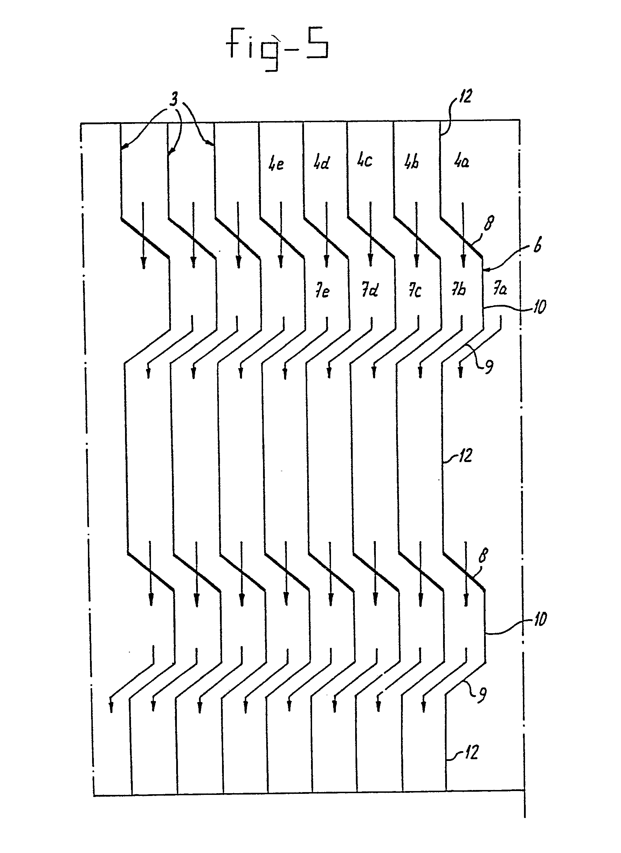

This typical shape of the partitions appears from figures 3 and 5. Each partition has one or more parts 6 bent in the direction of the product supply. These partition parts 6 form compartment parts 7 which are also offset in the direction of the product supply.

In the shown embodiment each partition has two parts 6 bent from the radial plane. At the location of such a bent portion, the partition has two parts 8, 9 which are inclined with respect to a radial plane and which are connected with each other by a radial part 10. The two parts 6 are connected with each other by a radial part 12. At the location of the transmission between the parts 9 and 12 there is a triangular anti-torsion part 11.

The perforated blades 5 extend from the drum wall to the inner circumferential edge of a part 8. Fingers 14 are mounted at some distance from the radial inner side of the blades 5. If the drum rotates in the direction of the arrow in figure 3, the product is lifted from the liquid by the blades 5 and is transported over the inner circumferential edge of the parts 8 into a next compartment 4.

The product in compartment 4a falls into a part 7b of compartment 4b which part 4b is offset in the direction of the product supply. At the same time the product in compartment 4b falls into a part 7c of compartment 4c also offset in the direction of the product supply etc. The product fallen into part 7b is transported by the liquid into the radial plane of compartment 4b etc. It is essential for the invention that at least a considerable portion of the transport of the product in the axial direction takes place in the liquid.

The blades 5 cause transportation of the product in radial plane which does not cause any problem even when the product is sticky.

When the drum rotates, the fingers 14 will come in touch with the product earlier than the blades. As a consequence thereof the slices will be tilted somewhat and will be taken along in a non lying position by the blades. This promotes the separating of product and liquid.

It will be clear that the product is transported batchwise through the machine, while the liquid forms a more or less continuous stream flowing over the inner circumferential edges of the partitions 3 or through openings in that partitions. The quantity of liquid flowing per hour through the drum may be chosen independent on the construction of the machine and of the rotation speed of the drum. When the product has arrived in the last compartment 7 it is deposited on a discharge conveyor 17 by scoops 16 secured to the end wall 15 of the drum 1. This conveyor protrudes through an opening of the end wall 15 into the drum 1. The discharge conveyor conveys the product to a hopper 18 underneath which a non shown conveying means is mounted. The driving of the rollers 2 on which the drum 1 rests, takes place by a motor 19. The driving shaft 21 of this motor drives a disc 22. A helical spring 23 extends between this disc 22 and a pulley 24 journalled on the shaft 21. The pulley has a driving connection through belts with pulleys 25 secured to the shafts 26 on which the rollers 2 are connected.

In the periods that the blades 5 lift the product from the liquid and transport the product in radial planes (separation and transportation period) a considerably greater couple is necessary than in the periods that the product is in the liquid (treatment period). As a consequence of the described driving transmission, comprising the helical spring 23 a certain compensation of the couple takes place. In the said separation and transportation period the spring 23 will be twisted and the circumferential speed of the drum will decrease so that additional time is available for leaking out. After the product has been slid from the blades, the spring can return to its non-twisted position and the drum rotation is thereby increased.

The most important advantages of the disclosed machine are:

— the axial transport of the product takes place at least for a part in the liquid.

— the compartments are separated from each other so that the product is treated batchwise; in case of a washing treatment the concentration of contaminations in the washing liquid will decrease in the direction of the product discharge.

— the product-liquid ratio is independent on the ratio of the quantities of the product and liquid flowing per hour through the machine.

— the internal space of the drum is visible from the outside and can be cleaned easily.

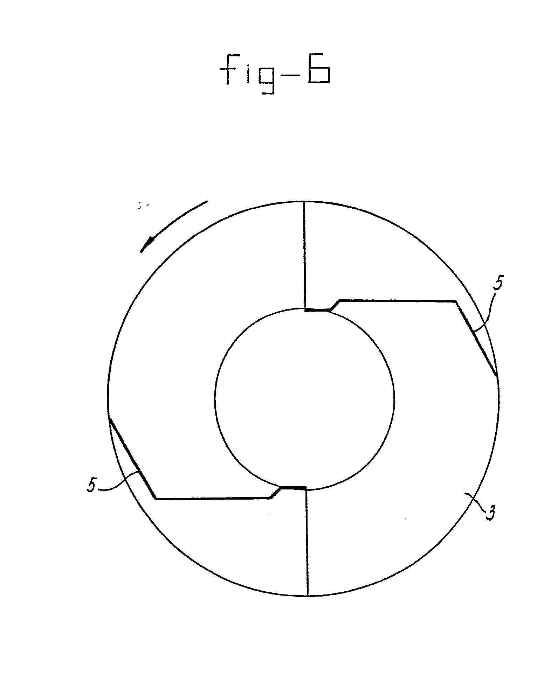

In one and the same drum a group of partitions 3 may be mounted having more or less bent portions 6 than another group of partitions. It is not necessary that the bent portions 6 consist of plane parts 8, 9, 10 having kinks there between, also continuous transitions are possible. The counterflow of product and liquid is advantageous in most cases, however, this counterflow is not necessary. In a certain portion of the drum additional water, e.g. comprising a treatment means, can be supplied through a pipe. By a hole in the drum also additional water can be discharged. The shape of the blades can be plane, bent and scoop shaped (vide fig. 6). The blades need not always be provided with openings. They may have a small inclination in the axial direction. The offset parts of the partitions may be provided with portions inclined in the axial direction, along which the product, fallen from the blade, may slide into a next compartment.

**Claims**

1. Machine for the treatment of a solid product with a liquid comprising a drum (1) divided by partitions (3), having a central opening, into a number of compartments, driving means for rotating the drum and in each compartment at least one blade (5) for the transportation of the product to a next compartment, wherein the liquid moves through the drum by overflow, characterized in, that the partitions (3) along a part of their circumferential length are offset in the direction of the product supply end, and that each blade (5) extends from the innerside of the drum wall to an offset part (6) of a partition (3) so that product picked up by a blade (5) in a compartment may slide from that blade in a plane substantially transverse to the drum axis and may fall over or via an offset partition part into a next compartment.

2. Machine according to claim 1, characterized in, that a number of fingers (14) are mounted at some radial distance from each blade (5) said fingers extending substantially parallel to said blade.

3. Machine according to one of the preceding claims, characterized in, that the end wall (51) of the drum at the side of the product discharge is provided at its inner plane with a number of discharge scoops (16) which may deposit the product on a discharge conveyor (17) protruding into the drum.

4. Machine according to one of the preceding claims, characterized in, that the partitions (3) in a part of the drum have a greater number of offset portions than in another part of the drum.

5. Machine according to one of the preceding claims, characterized by means to decrease the angular velocity of the drum during that portion of a drum rotation in which the product is transported.

6. Machine according to claim 5, characterized in, that a spring (23) is mounted in the driving means of the drum, said spring being able in the period that the product is taken up and transported by the blades, to slow down the rotation of the drum by elastic deformation, which slowing down is overtaken after the product has slid from the blades (5).

7. Machine according to one of the preceding claims, characterized in, that the distance along which the offset portions (6) of the partitions (3) extend in the axial direction is substantially equal to the distance between the partitions.

8. Machine according to one of the preceding claims, characterized in, that to prevent liquid from flowing over a partition in the direction of the liquid supply side of the drum and for slowing down the sliding of the product from the blades, the blades are substantially scoop shaped.

## Revendications

1. Machine pour le traitement d'un produit solide par un liquide, comprenant un tambour (1) divisé par des cloisons (3), ayant une ouverture centrale, en un certain nombre de compartiments, des moyens d'entraînement en rotation du tambour, et dans chaque compartiment, au moins une pale (5) capable de transporter le produit jusqu'à un compartiment suivant, dans laquelle le liquide circule dans le tambour par débordement, caractérisée en ce que les cloisons (3) le long d'une partie de la longueur de leur circonférence sont décalées dans la direction de l'extrémité d'arrivée du produit, et dans laquelle chaque pale (5) s'étend entre la face intérieur de la paroi du tambour et une partie décalée (6) d'une cloison (3) si bien que le produit prélevé par une pale (5) dans un compartiment, peut glisser de cette pale dans un plan sensiblement perpendiculaire à l'axe du tambour et tomber par dessus ou par l'intermédiaire d'une partie décalée de cloison jusque dans un compartiment suivant.

2. Machine selon la revendication 1, caractérisée en ce qu'un certain nombre de doigts (14) sont montés à une certaine distance radiale de chaque pale (5), ces doigts étant sensiblement parallèles à la pale.

3. Machine selon l'une des revendications précédentes, caractérisée en ce que la paroi d'extrémité (51) du tambour, du côté sortie du produit, est équipée sur sa face intérieure d'un certain nombre de godets de sortie (16) qui peuvent déposer le produit sur un convoyeur de sortie (17) dépassant à l'intérieur du tambour.

4. Machine selon l'une quelconque des revendications précédentes, caractérisée en ce que les cloisons (3) dans une partie du tambour, ont un nombre de portions décalées plus grand que les cloisons d'une autre partie du tambour.

5. Machine selon l'une quelconque des revendications précédentes, caractérisée par des moyens de réduction de la vitesse angulaire du tamour pendant la portion de la rotation du tambour au cours de laquelle le produit est transporté.

6. Machine selon la revendication 5, caractérisée en ce qu'un ressort (23) est monté dans les moyens d'entraînement du tambour, ce ressort étant capable, dans la période où le produit est prélevé et transporté par les pales, de ralentir la rotation du tambour par déformation élastique, ce ralentissement étant supprimé lorsque le produit a glissé des pales (5).

7. Machine selon l'une quelconque des revendications précédentes, caractérisée en ce que la distance le long de laquelle s'étendent les portions décalées (6) des cloisons (3) dans la direction axiale est sensiblement égale à la distance entre les cloisons.

8. Machine selon l'une quelconque des revendications précédentes, caractérisée en ce que les pales ont sensiblement la forme de godets pour éviter au liquide de circuler par dessus une cloison dans la direction de l'arrivée du liquide dans le tambour et pour ralentir le glissement du produit hors des pales.

## Patentansprüche

1. Maschine zur Behandlung eines festen Gegenstandes in einer Flüssigkeit, die eine Trommel (1) aufweist, die durch Zwischenwände (3), die eine Mittelöffnung haben, in eine Anzahl von Kammern unterteilt ist, die eine Antriebseinrichtung zum Drehen der Trommel und in jeder Kammer wenigstens ein Schaufelblatt (5) zum Transport des Gegenstandes zu einer nächsten Kammer aufweist, wobei sich die Flüssigkeit durch die Trommel mittels Überlauf bewegt, dadurch gekennzeichnet, daß die Zwischenwände (3) längs eines Teils ihrer Umfangslänge in Richtung des Gegenstandsaufgabeendes versetzt sind, und daß jedes Schaufelblatt (5) sich von der Innenseite der Trommelwand zu einem versetzten Teil (6) einer Zwischenwand (3) derart erstreckt, daß der mittels eines Schaufelblatts (5) in einer Kammer aufgenommene Gegenstand von dem Schaufelblatt in eine Ebene im wesentlichen quer zur Trommelachse gleitet und über oder mittels eines versetzten Zwischenwandteils in eine nächste Kammer fallen kann.

2. Vorrichtung nach Anspruch 1, dadurch gekennzeichnet, daß eine Anzahl von Fingern (14) in einem gewissen radialen Abstand von jedem Schaufelblatt (5) angebracht ist, daß die Finger (14) im wesentlichen parallel zum Schaufelblatt verlaufen.

3. Vorrichtung nach einem der vorangehenden Ansprüche, dadurch gekennzeichnet, daß die Stirnwand (51) der Trommel an der Gegenstandsaustragsseite an ihrer inneren Ebene mit einer Anzahl von Austragsschaufeln (16) versehen ist, die den Gegenstand auf einen Austragsförderer (17) ablegen können, der in die Trommel hineinragt.

4. Vorrichtung nach einem der vorangehenden Ansprüche, dadurch gekennzeichnet, daß die Zwischenwände (3) in einem Teil der Trommel eine größere Anzahl von versetzten Abschnitten als in einem anderen Teil der Trommel haben.

5. Vorrichtung nach einem der vorangehenden Ansprüche, gekennzeichnet, durch eine Einrichtung zur Verminderung der Winkelgeschwindigkeit der Trommel während jenes Teils einer Trommelumdrehung, in dem der Gegenstand transportiert wird.

6. Vorrichtung nach Anspruch 5, dadurch gekennzeichnet, daß eine Feder (23) in der Antriebseinrichtung der Trommel angebracht ist, und daß die Feder in dem Zeitraum, zu dem der Gegenstand aufgenommen und durch die Schaufelblätter transportiert wird, die Drehung der Trommel durch elastische Verformung verlangsamen kann, und die Verlangsamung wieder aufgehoben wird, nachdem der Gegenstand von den Schaufelblättern (5) geglitten ist.

7. Vorrichtung nach einem der vorangehenden Ansprüche, dadurch gekennzeichnet, daß die Distanz, längs der die versetzten Abschnitte (6) der Zwischenwände (3) sich in axialer Richtung erstrecken, etwa gleich der Distanz zwischen den Zwischenwänden ist.

8. Vorrichtung nach einem der vorangehenden Ansprüche, dadurch gekennzeichnet, daß die Schaufelblätter im wesentlichen schaufelförmig ausgebildet sind, um zu verhindern, daß die Flüssigkeit über eine Zwischenwand in Richtung der Flüssigkeitszufuhrseite der Trommel überströmt und um das Gleiten des Gegenstandes von den Schaufelblättern zu verlangsamen.

Fig-1

Fig-2

fig-3

fig-4

3

Fig-5

Fig-6